# EUROPÄISCHE PATENTSCHRIFT

(11) **EP 2 090 353 B1**
(45) Veröffentlichungstag und Bekanntmachung des Hinweises auf die Patenterteilung: **11.07.2012**
(21) Anmeldenummer: 09001361.6
(22) Anmeldetag: 31.01.2009
(51) Int. Cl.: B01F 13/00, B01F 5/00, B01F 13/10, B01F 15/06, B01J 19/00

(54) **Reaktionsmischersystem zur Vermischung und chemischer Reaktion von mindestens zwei Fluiden**
Reaction mixing system for mixing and chemical reaction of at least two fluids
Système de mélangeur à réaction destiné au mélange et réaction chimique d'au moins deux fluides

(30) Priorität: 15.02.2008 DE 102008009199
(43) Veröffentlichungstag der Anmeldung: 19.08.2009
(73) Patentinhaber: Karlsruher Institut für Technologie, 76131 Karlsruhe (DE)
(72) Erfinder: Schubert, Klaus, 76227 Karlsruhe (DE); Kraut, Manfred, 76351 Linkenheim-Hochstetten (DE); Wenka, Achim, 75196 Remchingen (DE)
(74) Vertreter: Weddigen, Andreas

(56) Entgegenhaltungen:
- EP-A- 0 196 280
- EP-A- 1 473 077
- WO-A1-2008/056975
- DE-A1- 4 416 343
- DE-A1-102005 015 433
- US-A- 3 795 451
- US-A- 4 534 659
- US-A1- 2004 011 413
- US-A1- 2005 041 525
- US-A1- 2005 265 899
- US-A1- 2006 102 519

## Beschreibung

Die Erfindung betrifft ein Reaktionsmischersystem zur Vermischung und chemischen Reaktion von mindestens zwei Fluiden gemäß Anspruch 1. Bei dem genannten Reaktionsmischersystem handelt es sich um ein System mit einem Reaktor für chemische Reaktionen sowie statischem Mischer zur Vermischung von mindestens zwei Fluiden, zusammengefasst in einem System, vorzugsweise einem Mikrosystem. Es ist ein statisches System, d.h. es umfasst außer den zu vermischenden und chemisch miteinander reagierenden Fluidfraktionen keine bewegten Teile.

Aus der DE 44 16 343 C2 ist beispielhaft ein statischer Mikrovermischer mit wenigstens einer Mischkammer und einem vorgeschalteten Führungsbauteil für die getrennte Zufuhr von zu mischenden Fluiden zu einer Mischkammer bekannt.

Auch die US 5.573.334 offenbart einen statischen Mischer für zwei Fluidfraktionen, umfassend eine zylinderförmige Mischkammer mit zwei Endbereichen, wobei je eine Einmündung pro Fluidfraktion sowie eine gemeinsame Ausmündung in je einem der Endbereiche positioniert sind. Auch hier in die Ausmündung durch eine konzentrische Bohrung im Boden der zylinderförmigen Mischkammer realisiert - grundsätzlich verbunden mit den vorgenannten Auswirkungen.

Die DE 10 2004 062 076 A1 offenbart einen statischen Mikrovermischer mit einer zylinderförmigen Mischkammer. In die Mischkammer sind Zuführungen für mindestens zwei zu mischende oder zu dispergierenden Fluide in die Mischkammer sowie mindestens eine Ausmündung vorgesehen. Die Einmündungen der Fluidfraktionen sind in abwechselnder Reihenfolge in mindestens einer Ebene angeordnet. Die Mischkammer weist zwei Endbereiche auf, wobei die Ausmündungen und die Einmündungen in je einem der Endbereiche positioniert sind sowie die Ausmündungen außerhalb der Symmetrieachse der Mischkammer angeordnet sind.

Das letztgenannte Mischerkonzept mit zylinderförmiger Mischkammer zeichnet sich durch eine wendelförmige Fluidführung (mit einer geringen Neigung zur Turbulenzbildung aus), die eine effiziente Vermischung in einem geringen Bauvolumen ermöglicht. Die beiden Fluidfraktionen werden dabei wendelförmig parallel geführt und vermischen sich kontinuierlich in Strömungsrichtung. Dadurch werden Rückvermischungen oder rückwärts gerichtete chemische Reaktionen der Fluidfraktionen zu den Einmündungen wirksam unterdrückt. Allerdings sind derartige Mischer in ihrem Durchsatz begrenzt, weswegen eine Parallelschaltung von Vermischern vorgeschlagen wird.

Aus der **EP 1 473 077 A2** ist ferner eine Apparatur zur Erzeugung von konzentrischen Vermischungen von Flüssigkeiten in einem Flüssigkeitsstrahl bekannt.

Alle genannten Mischertypen kennzeichnen sich jedoch dadurch aus, dass sie grundsätzlich nur für die Vermischung von Fluiden konzipiert sind und chemische Reaktionen während der Vermischung ausgeschlossen werden sollen. Eine Reaktion würde die angestrebte laminare Strömung beeinflussen und zumindest mit zunehmenden (wendelförmigen) Strömungsweg in einen ungeordneten Strömungszustand übergehen. In Folge dessen wäre die verweilzeit in der Mischkammer nicht mehr einheitlich. Folglich sah das Konzept vor, die eigentliche Reaktion in nachgeschalteten Reaktoren, also in separaten Einheiten stattfinden zu lassen.

Die DE **10 2005 015 433 A1** offenbart ein Reaktorsystem umfassend ein Mischersystem der genannten Art. Das System weist zur Kapazitätserweiterung eine Vielzahl von parallel geschalteten Mikrovermischern mit zylinderförmigen Mischkammern auf und ist damit speziell für eine Vermischung und Reaktion von Fluidfraktionen im industriell für eine Produktion relevanten Durchsatz konzipiert. Durch die Parallelschaltung wird einerseits die gute Vermischungseffizienz des vorgenannten Mischerkonzepts und gleichzeitig einem erhöhten Fluiddurchsatz bei gleichem oder geringerem Druckverlust realisiert. Die vermischten Fluidfraktionen werden von den Vermischern zur Homogenisierung in einen gemeinsamen Verteilungskanal als Zwischenvolumen und von dort zu separaten Reaktionseinheiten weitergeleitet. Vermischer und Reaktionseinheiten sind im Rahmen des Reaktorsystems funktionell und baulich voneinander getrennt.

Auch die **US 2005/265899 A1** offenbart ein derartiges Reaktionsmischersystem mit einer funktionalen Trennung von Vermischung und Reaktion in jeweils einem eigenen Teilvolumen, wobei jede Vermischung und jede Reaktion jeweils in einem einzigen Teilvolumen vorgesehen ist.

Die US 4 534 659 und EP 0 196 280 offenbaren ein Reaktionsmischersystem gemäß dem Oberbegriff des Anspruch 1.

Die nach veröffentlichte WO 2008/056975 offenbart alle Merkmale des Anspruch 1, wobei die Teilvolumina eine Form mit einer zentralen Verjüngung der Mantelfläche und anschließender Erweiterung der Mantelfläche aufweisen.

Davon ausgehend besteht die **Aufgabe der Erfindung** also darin, ein Reaktionsmischersystem vorzuschlagen, mit dem ein Fluiddurchsatz im relevantem industriellen Maßstab ohne die funktionale Trennung von Vermischer und Reaktionseinheiten ohne die vorgenannten Einschränkungen vorgesehen werden kann.

Die Aufgabe wird durch einen Reaktionsmischersystem mit den Merkmalen aus Anspruch 1 gelöst; die hierauf bezogenen Unteransprüche beinhalten vorteilhafte Ausführungsformen dieser Lösungen.

Zur Lösung der Aufgabe wird ein Reaktionsmischersystem mit den Merkmalen des Anspruchs 1 zur Vermischung und chemischen Reaktion von mindestens zwei Fluiden vorgeschlagen, umfassend mindestens einen Reaktionsvermischer, vorzugsweise einem Mikroreaktionsvermischer mit einem Reaktionsmischvolumen, das in eine Kaskade von mindestens zwei Teilvolumina unterteilt ist.

Wesentlich ist die Aufteilung des Reaktionsmischvolumen in mindestens zwei fluidisch hintereinander geschaltete separate Teilvolumina jeweils mit Einmündungen und jeweils einer Ausmündung, wobei diese Teilvolumina über jeweils eine Verbindungsleitung miteinander verbunden sind und sowohl als Mischteilvolumina und Reaktionsteilvolumina vorgesehen oder konzipiert sind. Durch diese Hintereinanderschaltung von Teilvolumina sind diese zur Durchführung von Reaktionen und Mischvorgängen verfahrenstechnisch signifikant besser kontrollier- und steuerbar. Dieser Vorteil tritt insbesondere bei mit oder nach einer Vermischung miteinander exotherm reagierenden Fluiden in den Vordergrund, wobei die Teilvolumina vorzugsweise unterhalb eines kritischen Volumens, unterhalb dessen eine unkontrollierte Reaktion nicht mehr erfolgt, dimensioniert werden. Grundsätzlich bestimmen die chemische Reaktionsneigung der Ausgangs- und Zwischenprodukte sowie das Erfordernis zur Einhaltung von bestimmten Temperaturintervallen bei der Vermischung und/oder Reaktion maßgeblich die Größe ein jedes dieser Teilvolumina. Ebenso sind durch die genannte Hintereinanderschaltung (Kaskadenschaltung) eine Einmischung mindestens eines der einzumischenden Fluide kontinuierlich, d.h. in mehrere dieser hintereinander geschalteten Teilvolumina und / oder in mindestens einem der Teilvolumina an verschiedenen Stellen gleichzeitig realisierbar. Eine spontane Vermischung und damit eine spontane Zuführung von Fluiden zu einer Reaktion sowie einer spontanen Reaktion der gesamten Fluidmengen werden damit vorteilhaft vermieden, was ein weiteres Kontroll- und / oder Steuerungsmittel für die Vermischung und Reaktion darstellt.

Wesentlich ist aber, dass die Misch- und Reaktionsvolumina, d.h. auch die vorgenannten Teilvolumina des Reaktionsmischersystems eine funktionelle Einheit bilden. Dies bedeutet nicht zwingend, dass das gesamte Volumen des Reaktionsmischersystems, d.h. alle vorgenannten Teilvolumina sowohl als Misch- als auch als Reaktionsvolumen zugleich dienen. Jedes der Teilvolumina dient entweder als Mischteilvolumen, als Reaktionsteilvolumen oder als Reaktionsmischteilvolumen. Dies bedeutet, dass die jeweils aus Teilvolumina zusammengesetzten Mischvolumina und die Reaktionsvolumina oder deren Teilvolumina vollständig oder zum Teil durch gemeinsame Reaktionsmischvolumina gebildet werden. Eine vollständige Trennung von Mischvolumen und Reaktionsvolumen ist im Rahmen der Erfindung nicht zwingend erforderlich. Vorzugsweise umfassen Reaktionsmischvolumina, Mischvolumina und/oder die Mischteilvolumina sowie die Reaktionsvolumina oder die Reaktionsteilvolumina vollständig.

Eine funktionale Trennung der Vermischung und der Reaktion durch separate Komponenten ist weder vorgesehen noch möglich. Die Fluide werden vorzugsweise in das erste Teilvolumen, bei bestimmten Ausführungsformen auch in den folgenden Teilvolumina eingeleitet, durchlaufen dieses als sich bildende Fluidmischung und/oder fluides Reaktionsprodukt und werden dann über jeweils eine Verbindungsleitung in das nächste Teilvolumen weitergeleitet.

Dies schließt z.B. eine Vorvermischung zweier Fluide in einem Mischteilvolumen (z.B. temperiert auf eine reaktionshemmenden Temperatur) und eine gemeinsame Weiterleitung in ein Reaktionsmischerteilvolumen (z.B. temperiert auf eine erhöhte, eine chemische Reaktion fördernden Temperatur) nicht aus. Auch liegen Verzeigungen oder Zusammenführungen von Verbindungsleitungen z.B. in bzw. aus mehreren parallel angeordneten Teilvolumina oder zur Verzweigung bzw. Zusammenleiten eines Stoffstroms zu bzw. aus unterschiedlichen Reaktionsabläufen im Rahmen der Erfindung, wie auch die Möglichkeit einer Rezyklierung (z.B. durch Abzweigung und Wiedereinmischung) bestimmter Stoffströme in mindestens eines bereits durchlaufenden Teilvolumen.

Bevorzugt sind die Teilvolumina nicht für einen kompletten verfahrenstechnischen Schritt konzipiert, d.h. eine Vermischung und / oder Reaktion erfolgt dabei nicht in einem Teilvolumen allein, sondern zieht sich vorzugsweise über den Durchlauf durch mehrere Teilvolumina hin. Dabei lassen sich einzelne Verweilzeiten über die Größe und/oder Form der jeweiligen Teilvolumina (z.B. auch über den direkten Zusammenhang zwischen der Verweilzeit und dem reziproken Volumen im Falle einer Volumenstromkonstanz der zu vermischenden und reagierenden Stoffströme) dimensionieren. Teilvolumina unterschiedlicher Größe und / oder Gestalt sind durch die Erfordernisse der Vermischung und Reaktion angepasst und liegen grundsätzlich im Rahmen der Erfindung. Dies gilt ebenso für eine mögliche Aufteilung oder Zusammenführung eines oder mehrerer Teilvolumina in mehrere parallel geschaltete Teilvolumina bzw. zu ein Teilvolumen.

Eine Unterteilung in mehrere Teilvolumina verringert die Gefahr von Rückvermischung und weisen im Vergleich zu einer Reaktionsmischkammer eine grundsätzlich höhere spezifische Wandungsfläche auf, die bereits für eine Temperierung bereits unmittelbar bei und nach der Vermischung und/oder Reaktion des Fluidgemisches nutzbar gemacht werden kann.

Die Teilvolumina und / oder die Verbindungsleitungen weisen vorzugsweise mindestens eine Temperierungsvorrichtung auf. Dies lässt eine exakte Temperaturführung im gesamten Reaktionsmischvolumen und in den Verbindungsleitungen zu, und zwar grundsätzlich für jede Verbindungsleitung und / oder jedes Teilvolumen individuell oder gruppenweise individuell. Damit lassen sich sowohl die Mischtemperatur als auch die Reaktionstemperaturen in jedem Teilvolumen in ihrer jeweiligen Dynamik beeinflussen. Fluide, die nur in einem bestimmten Mischtemperaturbereich miteinander mischbar sind, können durch ein erneutes Absenken z.B. in einem nachfolgenden Teilvolumen gezielt auch wieder entmischt werden. Ebenso lassen sich bestimmte Teilreaktionen durch Anfahren bestimmter Temperaturbereiche auch unterdrücken (z.B. Korrosion) oder selektiv einleiten. Durch eine selektive Unterkühlung einer Verbindungsleitung gegenüber den Temperaturen in den angrenzenden Teilvolumina unter eine reaktionshemmende Temperatur kann in vorteilhafter Weise ein Übergreifen der Reaktion durch die Verbindungsleitung in ein benachbartes Teilvolumen unterdrückt werden.

Die Teilvolumina sind zur grundsätzlichen Ermöglichung einer wendelförmigen Strömung der eingangs genannten Art von einer um je eine Symmetrieachse symmetrischen, weiter bevorzugt zylindrischen Gestalt, jeweils mit je einer Mantelfläche und zwei Stirnflächen. Eine konische, in Richtung der Ausmündungen hin verjüngende Gestalt dient der zunehmenden Beschleunigung und Verwirbelung der Fluide in den wendelförmig sich bildenden Fluidstromfäden. Weist die Gestalt mindestens eine zentrale Verjüngung oder Einschnürung auf (z.B. Gestalt einer Laval-Düse), wobei diese Gestalt nicht in Rahmen der Erfindung liegt, nimmt die Geschwindigkeit mit zunehmendem Durchmesser wieder ab, womit der Druckverlust bei der Durchströmung gegenüber der konischen Ausführungsform in vorteilhafter Weise reduziert wird.

Die Zuleitungen für die Fluide durchdringen eine der beiden Stirnfläche und/oder der Mantelfläche an dieser Stirnfläche der Teilvolumina sowie eine Ausmündung die jeweils andere Stirnfläche oder die Mantelfläche an der anderen Stirnfläche. Die Ausrichtung der Zuleitungen und auch der Ausmündungen erfolgt außerhalb der Symmetrieachse der Teilvolumina in Richtung einer wendelförmigen Strömung (Fluidstromfäden) im Teilvolumen, tangential an der Mantelfläche. Die Verbindungsleitungen schließen sich an diese Ausmündungen an. Außerdem können zur Realisierung einer verzögerten Einmischung und / oder vorzeitigen Fluidteilstromabtrennung zusätzliche Zuleitungen an der Mantelfläche zwischen den beiden Stirnflächen vorgesehen werden.

Vor Einleitung der Fluide (Ausgangsfluide) in das erste Teilvolumen werden diese vorzugsweise fraktionsweise in eine Vielzahl von Mikrostromfäden aufgeteilt und vorzugsweise mit Bezug auf die Fluidfraktion in abwechselnder Reihenfolge in das jeweilige Teilvolumen eingeleitet. Mit abnehmenden Querschnittsabmessungen der einzelnen Fluidstromfäden werden zunehmend große spezifische Kontaktflächen zwischen den unterschiedlichen Fluidfraktionen erzielt, was eine Vermischung der einzelnen Fluidfraktionen erheblich beschleunigt. Die genannten Reaktormischsysteme garantieren damit in vorteilhafter Weise eine besonders schnelle vollständige und damit wirkungsvolle Vermischung der Fluide bei gleichzeitig geringen Bauvolumen.

Turbulente Strömungsanteile verbessern zwar grundsätzlich die Effizienz einer Durchmischung oder Dispergierung der Fluidstromfäden in einem Reaktionsmischteilvolumen, verursachen allerdings auch größere, bei bestimmten, insbesondere reaktiven Vermischungsvorgängen unbedingt zu vermeidenden Verweilzeitunterschiede der Fluidmischungen und Reaktionsprodukte in einem Teilvolumen. Durch eine Vermeidung oder Reduzierung von turbulenter Strömung sinken in vorteilhafter Weise auch Einflüsse durch die vorgenannten Verweilzeitunterschiede, insbesondere im Vergleich zu den Vorrichtungen gemäß des Stands der Technik.

Sind die Einmündungen einer Ebene zu denen in der jeweils benachbarten Ebene um jeweils eine Einmündung versetzt angeordnet, erhält man eine Einbettung der in die Mischkammer einströmenden Fluidstromfäden in jeweils eine oder mehrere andere Fluidfraktionen. Idealerweise grenzt jeder der Fluidstromfäden vollständig, d.h. an allen Seiten an Fluidstromfäden einer anderen Fluidfraktion, womit eine größtmögliche spezifische Vermischungsfläche zwischen den Fluidfraktionen und in Folge dessen eine weitere Verbesserung der Vermischungseffizienz erzielbar ist. Bei der Vermischung oder Dispergierung von zwei Fluidfraktionen entsteht idealer weise eine Anordnung der einzelnen Einmündungsquerschnitte ähnlich einer Schachbrettanordnung.

Die Ausrichtung der Einmündungen zu einem rotationsymmetrischen Reaktionsmischteilvolumen, d.h. der Einstrahlungswinkel der Fluidstromfäden erfolgt zwischen 0° (parallel zur Wandung des Teilvolumens, z.B. der Mantelfläche) und 90° (orthogonal zu der Wandung, z.B. der Mantelfläche) vorzugsweise zugunsten einer laminaren Strömung parallel zueinander in Richtung des oder der Auslässe. Die Einmündungen sind zur Erzeugung einer bevorzugten wendelförmigen Fluidführung in der Mischkammer tangential vorzugsweise mit einem geringen Steigungswinkel zu der als Wandung dienenden Mantelfläche des Teilvolumens angeordnet.

Eine fluidische Parallelschaltung einer Vielzahl von Reaktionsmischsysteme erhöht den Fluiddurchsatz. Es bietet sich an, zu vermischenden mindestens zwei Fluidfraktionen über jeweils eine einzige Anschlussleitung in das Reaktormischsystem einzuleiten und durch Zuleitungen in einer Führungsmatrix im System auf die einzelnen, vorzugsweise identischen ersten Teilvolumina aufzuteilen. Die Zuleitungen in der Führungsmatrix sind dabei so zu gestalten, dass am Eintritt in jeden der Mikrovermischer identische Strömungs- und Druckverhältnisse in den zugeführten Fluiden vorliegen. Dies ist vorzugsweise durch eine möglichst maximale Aufweitung der Zuleitungen zwischen Anschluss und Reaktionsmischersystem realisierbar, was in vorteilhafter Weise sowohl die Fluidgeschwindigkeit als auch den Fluidwiderstand lokal reduziert, Grundvoraussetzung für identische Fluidverhältnisse an allen Reaktionsmischersystemen.

Die Erfindung wird beispielhaft anhand von Ausführungsbeispielen mit den folgenden Figuren näher erläutert. Es zeigen:
**Fig.1a** **und b** Ausführungsformen (Grundbauformen), aufgebaut mit strukturierten plattenförmigen Bauteilen,
**Fig.2a** **bis c** mögliche Schnittdarstellungen von Ausführungsformen, aufgebaut mit strukturierten plattenförmigen Bauteilen entsprechend der in **Fig.1** dargestellten Ausführungsformen,
**Fig.3** eine Detailansicht einer beispielhaften Anordnung von Zuleitungen für zwei Fluide in einem plattenförmigen Bauteil,
**Fig.4** beispielhaft eine Anordnung von Zuleitungen in ein Teilvolumen in zwei Ebenen,
**Fig.5** beispielhaft für eine Parallelschaltung mehrerer fluidischer Reaktionsmischersysteme auf einem plattenförmigen Bauteil sowie
**Fig.6a** **bis c** Ausgestaltungen der rotationssymmetrischen Mantelflächen eines Teilvolumens, die nicht Teil der Erfindung sind.

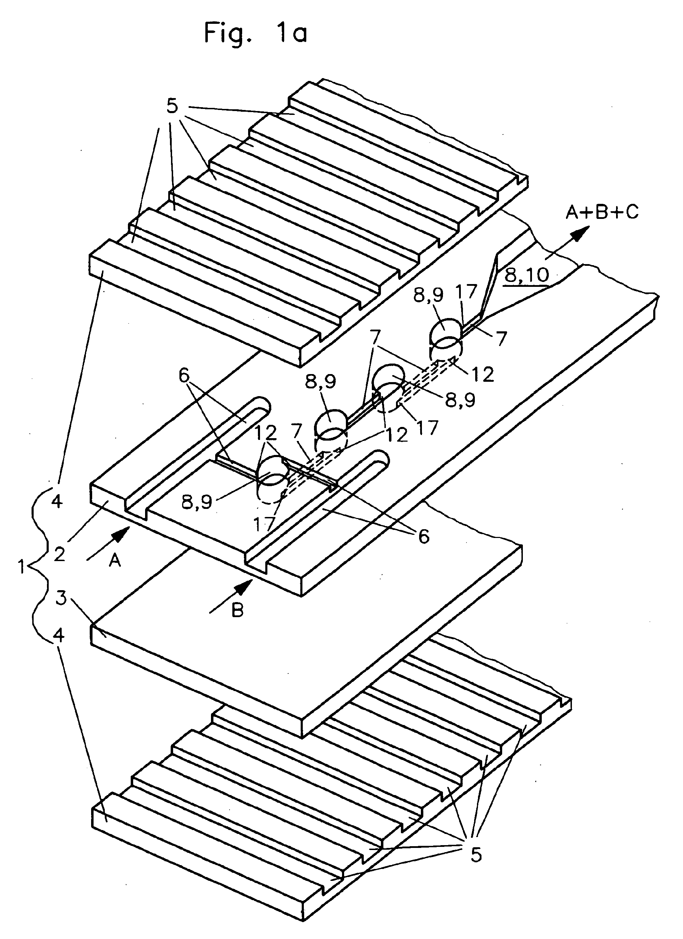

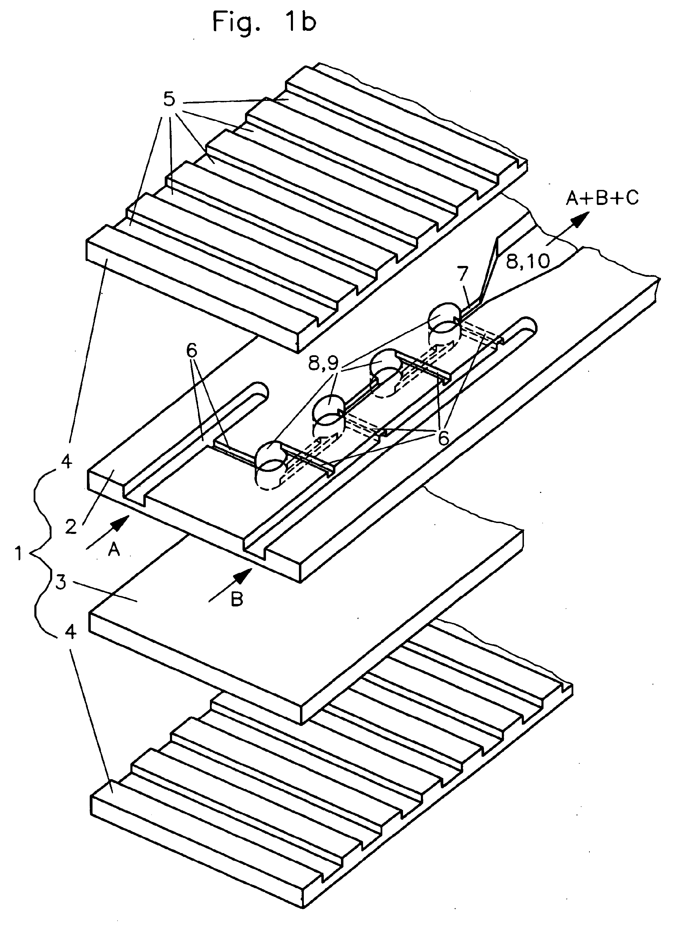

Wesentliche Komponenten von Ausführungsformen eines Reaktionsmischersystems repräsentieren **Fig.1a** **und b** in prinzipieller perspektivischer Darstellung (Explosionszeichnungen). Beide dargestellten Ausführungsformen umfassen je einen Folienverbund **1** (oder Plattenverbund) mit einer Anzahl von plattenförmigen Bauteilen (Folie) **2** bis **4**.

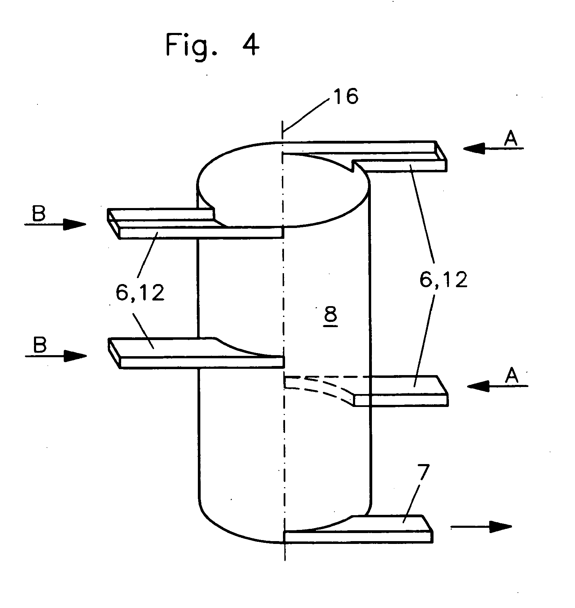

Eine Mischerfolie **2** umfasst dabei die Fluidkanäle **6** für zwei zu mischende Fluide **A** und **B** sowie in vorgenannter Weise fluidisch über Verbindungsleitungen **7** verbundene hintereinander geschaltete Teilvolumina **8.** Die Fuidkanäle sind zur Reduzierung von Strömungsverlusten breit angelegt und verjüngen oder verzweigen sich erst kurz vor den Einmündungen **12** in die Teilvolumina **8** zu engen Kanälen. Die Teilvolumina umfassen hierbei mehrere Mischteilvolumina **9** und ein sich trichterförmig erweiternden zusätzlichen Reaktionskanal **10** als Reaktionsteilvolumen. Fluidkanäle, Reaktionskanal sind als rillenförmige Strukturen und / oder als Durchbrüche in die Mischerfolie eingearbeitet. Die Strukturen und Durchbrüche auf der Mischerfolie stellen eine Führungsmatrix für das Reaktionsmischersystem dar. Sie werden im Rahmen der Erfindung einseitig oder beidseitig durch Abdeckplatten, z.B. mindestens eine unstrukturierte Blindfolie **3** oder strukturierten Folien wie weitere Mischerfolien (vgl. **Fig.4****)** und/oder die bevorzugt unstrukturierte Seite von Temperierfolien **4** (vgl. z.B. **Fig.1a** **und b)** abgedeckt.

Die Ausführungsform in **Fig.1a** weist Fluidleitungen **6** für die Ausgangsfluide **A** und **B** auf, die nur in das erste Teilvolumen ausmündet. Sie unterscheidet sich in diesem Punkt von der Ausführungsform in **Fig.1b****,** bei der die Fluidleitungen **6** für das Fluid **B** in mehrere Teilvolumina **8** ausmündet und damit eine kontinuierliche Einmischung des Fluids **B** ermöglicht. Alternative oder zusätzliche Fluidleitungen als Zuleitungen in mehr als ein Teilvolumen auch für das Fluid **A** liegen ebenso im Rahmen der Erfindung wie eine Verzweigung der Fluidleitungen zu mehreren Einmündungen in ein oder mehreren Teilvolumina.

Die Temperierfolien **4** weisen rillenförmige Kanalstrukturen **5** als Temperierfluidleitungen zur Durchleitung eines Temperierfluids, vorzugsweise einer Flüssigkeit auf. Sie stellen die Temperiermittel für das Reaktionsmischersystem dar. Sind diese, wie in **Fig.1a** **und b** dargestellt, orthogonal zu der Erstreckung der Hintereinanderschaltung der Teilvolumina, ausgerichtet, erstreckt sich die Überdeckung einer jeden dieser Kanalstrukturen auf ein Teilvolumen. Überdeckt eine Kanalstruktur nur ein Teilvolumen, ist die Temperatur in diesem vorteilhaft individuell über eine individuelle Einspeisung von Temperierfluid mit einer bestimmten Temperatur einstellbar.

Vorzugsweise sind die Kanalstrukturen **5** fluidisch vollständig von den Fluiden **A** und **B** sowie deren Misch- oder Reaktionsprodukten getrennt, d.h. von den Teilvolumina **8,** Fluidkanälen **6,** Verbindungsleitungen **7** sowie anderen Mischteilvolumina **9** oder Reaktionskanälen (Reaktionsteilvolumen **10)** getrennt.

Im Rahmen einer möglichen Variante der Erfindung erfolgt eine Einspeisung der Fluide **A** und **B** in ein Teilvolumen **8** nach erfolgten Durchlauf als Temperiermittel für die Teilvolumina. Übertragen auf **Fig.1a** **und b** bedeutet dies, dass die Fluide **A** und **B** auch als Temperierfluid herangezogen werden, d.h. zunächst durch die Kanalstrukturen **5** geleitet werden, um anschließend von dort in die Fluidleitungen **6** eingeleitet werden. In diesem Fall besteht im Rahmen der Erfindung eine fluidische Verbindung zwischen Kanalstruktur **5** und Fluidleitungen **6.**

Ebenso liegt eine Durchdringung der Mischerfolien **2** durch Temperiermittel im Rahmen der Erfindung. Beispielsweise durchdringen dabei die Fluidleitungen für die Temperierfluide die Mischerfolien (z.B. über nicht weiter dargestellte Durchbrüche), ohne dass es zu einer fluidischen Verbindung zwischen Temperierfluid und den Fluiden **A** und sowie dem Reaktionsprodukt **C** kommt.

Das Konzept sieht optional eine funktionale Trennung von Vermischung und Reaktion der Fluide **A** und **B** in verschiedenen Teilvolumina ohne ein Zwischenvolumen zur Homogenisierung einer Fluidmischung (z.B. **A+B)** vor. Im Rahmen von Ausführungsvarianten ist die genannte funktionale Trennung nicht gegeben; alle, zumindest aber eines der Teilvolumina **8** sind dann als Reaktionsmischteilvolumina vorgesehen.

Grundsätzlich lässt sich die Reaktion der zu mischenden Fluide in einem Teilvolumen durch eine entsprechende Temperierung desselben und / oder durch einen Katalysator wie z.B. eine optionale zusätzliche katalytisch wirkende Innenbeschichtung oder eine Herstellung einem angrenzenden Folien- oder Plattenbereich aus einem Katalysatormaterial beeinflussen. Wie vorgenannt ist ein Reaktionsmischteilvolumen allein durch Absenkung der Fluidtemperatur im Teilvolumen auf eine reaktionshemmende Temperatur funktional zu einem reinen Mischteilvolumen umschaltbar, während ein Mischteilvolumen durch eine entsprechende Temperaturführung mit einer Fluidtemperatur im Bereich einer die chemische Reaktion fördernden Temperatur zu einem Reaktionsmischteilvolumen mutiert. Durch einen Einsatz eines Katalysators in einem Teilvolumen lässt sich der Beginn der chemischen Reaktion in genau diesem Teilvolumen einleiten oder die Reaktion auf dieses Teilvolumen begrenzen.

Die eingespeisten Fluide **A** und **B** verlassen das Reaktionsmischersystem im Falle einer nicht vollständig ablaufenden Reaktion als eine Mischung aus Reaktionsprodukt **C** und einer nicht reagierten Mischung **A+B,** d.h. aus einer Mischung aus den Produkten **A+B+C,** wobei das Verhältnis von **(A+B)/C und** damit der Reaktionsgrad durch die vorgenannte Maßnahmen, wie z.B. über die Temperatur in den Teilvolumina oder mittels Katalysatoren beeinflussbar und steuerbar ist. Eine Einmischung eines oder mehrerer Ausgangsfluide zu den Ausgangsfluiden **A** und **B** liegt ebenso im Rahmen der Erfindung wie eine Reaktion der Ausgangsfluiden zu mehr als einem Reaktionsprodukt **C** (weitere Reaktionsprodukte).

Alle genannten Folien (oder Platten) lassen sich einzeln vor einem Zusammensetzen im Rahmen einer Qualitätskontrolle optisch untersuchen. Die genannten Folien bzw. Platten sind aus einem zu den Fluiden sowie den Reaktions- und Mischprodukten **A, B** und **C** (und ggf. weiteren) chemisch beständigen Material gefertigt und werden vor einem Einbau in hier ein nicht dargestelltes Gehäuse miteinander verbunden (z.B. chemisch und physikalisch beständige Verklebung, Diffusionsverschweißung oder Pressung im Gehäuse etc.). Da nicht alle genannten Folien (oder Platten) mit allen Fluiden und Produkten aus diesen in Verbindung kommen, können in einem Reaktionsmischersystem auch unterschiedliche Folienmaterialien zum Einsatz kommen. Als Material eignet sich besonders Chrom-Nickel-Stähle, chemisch beständige Kunststoffe oder Gläser, welche sich mechanisch (spangebend oder prägend), elektroerosiv oder chemisch (ätzen) sehr fein strukturieren lassen.

Ausdrücklich umfassen in Bezug auf die Erfindung die genannten Folien und Folienverbünde (Folienstapel) stets auch Platten oder Bleche bzw. Platten- oder Blechverbünde wie auch andere sich flächig erstreckende Komponenten oder Komponentenverbünde, auch wenn diese nicht explizit in der Anmeldung genannt sind.

Bei einem Zusammensetzen des System bietet es sich an, zunächst nur die Mischerfolie **2** und die an diese angrenzenden Folien zu einem Folienteilverbund zu montieren, um die dadurch funktionstüchtigen Reaktionsmischer auf dem Folienteilverbund im Rahmen einer Qualitätskontrolle einzeln auszutesten, ein nicht zu unterschätzender Vorteil dieser Bauform. Allerdings ist bei einem defekten Reaktionsmischer u.U. der gesamte Folienteilverbund unbrauchbar. Ferner lässt sich der so geprüfte Folienteilverbund durch iterative Ergänzung weiterer Folien Schritt für Schritt fertig stellen, wobei zwischen jeden Teilschritt eine empirische Teilüberprüfung (automatisiert oder manuell) möglich ist. Die Ausführungsform zeichnet sich dadurch aus, dass sich eine große Anzahl von Reaktionsvermischern in der Führungsmatrix besonders eng aneinander integrieren lassen, und zwar im Falle einer parallelen wie z.B. chemischen (ätzenden) Strukturierung der Folien ohne einen Fertigungsmehraufwand.

Die Teilvolumina **8** weisen Ein- und Ausmündungen für die genannten Fluide, Mischungen und Reaktionsprodukte auf, wobei die Ausrichtung dieser zum Teilvolumen in Strömungsrichtung erfolgt. Die dargestellten zylindrischen Teilvolumina sind so ausgelegt, dass sich eine laminare wendelförmige Strömung bildet. Entsprechend münden die Ein- und Ausmündungen der Teilvolumina tangential zur Mantelfläche dieser Volumina aus (vgl. **Fig.1a** **und b, sowie 3 bis 6**).

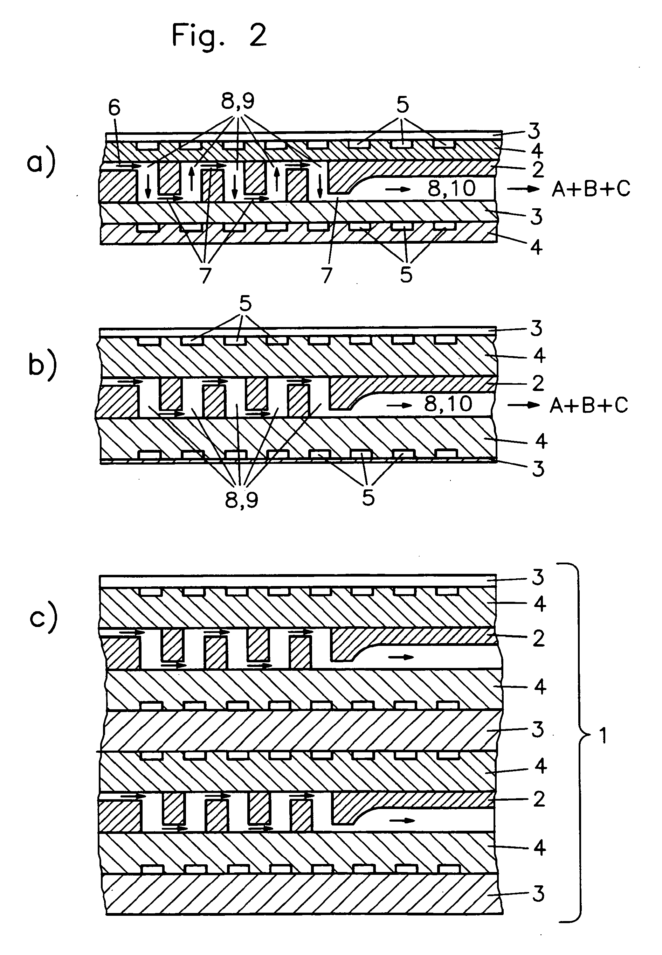

**Fig.2a** **bis c** zeigen beispielhafte unmaßstäbliche Schnittdarstellungen von Reaktionsmischern. **Fig.2a** zeigt ein System entsprechend der in **Fig.1a** **und b** dargestellten Ausführungsform.
**Fig.2b** zeigt eine ähnliche Ausführungsform, bei der die Mischfolie **2** beidseitig durch unstrukturierte Seiten von Temperierfolien **4** abgedeckt ist. Blindfolien **3** dienen lediglich der Abdeckung der Kanalstrukturen **5** der Temperiermittel oder im Falle, dass sie nicht zwischen Misch- und Temperierfolie angeordnet sind, als thermische Isolierung.

Schichtweise aufgebaute Reaktionsmischersysteme lassen sich, wie in **Fig.2c** beispielhaft dargestellt, grundsätzlich in periodisch wiederkehrenden Schichtfolgen stapeln. Dadurch wird durch eine Parallelschaltung mehrerer Reaktionsmischer eine Erhöhung der Durchsatzkapazität erzielt. Dabei sind zwischen zwei Mischfolien **2** ein Verbund von zwei Temperierfolien **4** und eine Blindfolie **3** vorgesehen, was im Falle einer thermischen Isolierung als Blindfolie eine individuelle Temperierung für jede Seite (Mischfolie) zulässt. Ist eine individuelle Temperierung nicht erforderlich, kann dieser Verbund durch eine Blindfolie und eine Temperierfolie, vorzugsweise aus gleichem Material gefertigt, reduziert werden.

In allen **Fig.2a** **bis c** sind die Fließrichtungen der Fluide **A** und **B** sowie des Fluidgemisches **A+B** sowie des Reaktionsproduktes **C** durch Pfeile dargestellt.

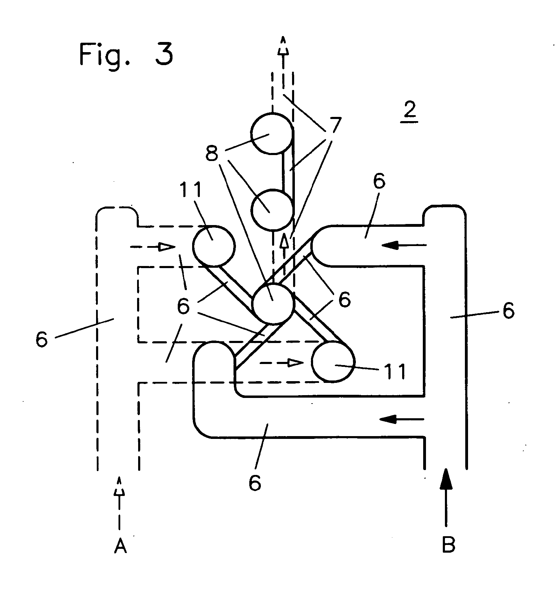

**Fig.3** zeigt in prinzipieller Draufsicht auf eine Mischfolie eine Ausführungsform, bei der das erste Teilvolumen mit Zuführungen (Fluidleitung **6)** für mindestens zwei zu mischenden oder zu dispergierenden Fluide **A** und **B** mit je mindestens einer Einmündung in das erste Teilvolumen sowie mindestens eine Ausmündung in vorgenannter bevorzugter Einströmungsrichtung (Verbindungsleitung **7)** umfassen. Die dargestellten vier Einmündungen der Fluide sind in abwechselnder Reihenfolge in einer Ebene angeordnet. Dies erfordert sich kreuzende Fluidleitungen **6** für die Fluide **A** und **B** (Ausgangsfluide). Derartige Überkreuzungen werden wie dargestellt im Rahmen eines Folienverbunds **1** (vgl.
**Fig.1a**) mittels Anordnung der Fluidleitungen auf mehreren Ebenen, vorzugsweise auf beiden Oberflächen einer Mischfolie, realisiert. Durchbrüche **11** überbrücken dabei die Ebenen. Das in **Fig.3** dargestellte erste Teilvolumen **8** ist auch hier rotationssymmetrisch sowie mit zwei Endbereichen gestaltet, wobei die Ausmündungen und die Einmündungen in je einem der Endbereiche positioniert sind.

Eine perspektivische Darstellung einer beispielhaften Anordnung von Einmündungen **12** in ein um eine Symmetrieachse **13** rotationssymmetrisch erstreckendes Teilvolumen **8** in mehr als einer Ebene zeigt **Fig.4****.** Bei einem Aufbau des Reaktionsmischersystems als Folienverbund bietet es sich an, das Teilvolumen durch einen Durchbruch bevorzugt deckungsgleich durch mehrere Mischerfolien zu konzipieren und die Zuleitungen in die Trennfugenbereiche zwischen zwei Mischfolien anzuordnen.

Die Verbindungsleitungen **7** müssen nicht zwingend durch einen Kanal gebildet sein. Vielmehr lassen sich auch als ein Bündel von parallel verlaufenen Mikrokanälen gestalten, wenn nach Verlassen eines Teilvolumens eine besondere Temperierung dies erfordert (z.B. Kühlung bei exothermen Reaktionen zwischen den Ausgangsfluiden). Auch lassen sich zur Handhabung exotherm miteinander reagierender Fluide, wie in **Fig.1b** **und** **4** beispielhaft dargestellt, die Einspeisung der Ausgangsfluide an verschiedenen Stellen in ein bestimmtes Teilvolumen bzw. an verschiedenen Teilvolumina vorsehen. **Fig.4** zeigt beispielhaft eine Anordnung, bei denen die Einmündungen **12** für jedes Fluid **A** und **B** übereinander angeordnet sind. Andere Anordnungen, wie z.B. Einmündungen in mindestens zwei Ebenen, wobei die Einmündungen einer Ebene zu denen in der jeweils benachbarte Ebene versetzt angeordnet sind, liegen ebenso im Rahmen der Erfindung wie eine e-benenweise Anordnung von Einmündungen, wobei pro Ebene Einmündungen für nur ein Ausgangsfluid und/oder mehr als zwei Ausgangsfluide (weitere zusätzliche Fluide außer **A** und **B**)vorgesehen werden.

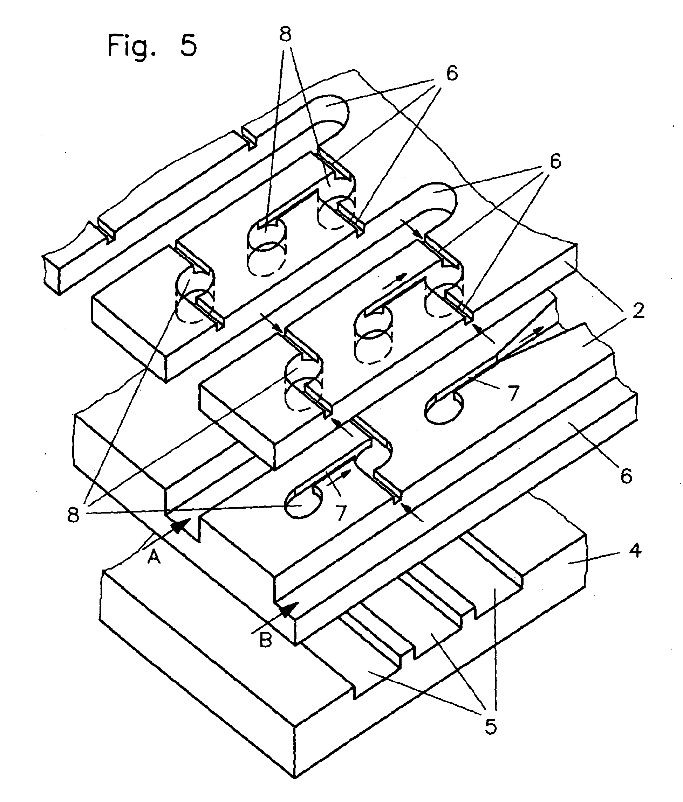

**Fig.5** zeigt beispielhaft für eine Parallelschaltung mehrerer fluidischer Reaktionsmischersysteme eine Anordnung dieser auf plattenförmigen Bauteilen, wobei im Gegensatz zu der in **Fig.2c** dargestellten Ausführungsform mehrere Reaktionsmischersysteme parallel auf gemeinsame Mischfolien **2** angeordnet sind. Diese Ausführungsform ist jedoch auch wie in **Fig.2c** dargestellt als Folienverbund vorzugsweise mit periodischer Stapelfolge stapelbar. Die Kapazität der parallel geschalteten Reaktionsmischersysteme addieren sich. Vorzugsweise weisen die Reaktionsmischersysteme dabei gleiche geometrische Daten (Abmessungen) und / oder identische Strömungs- und Reaktionsverhältnisse auf. Ebenso können mehrere Reaktionsmischersysteme nach Durchlauf einer bestimmten Anzahl von Teilvolumina in ein gemeinsames Teilvolumen einmünden und von da einer gemeinsamen Kaskade weiterer Teilvolumen weitergeleitet werden. Ferner weisen die Reaktionsmischersysteme gemeinsame Fluidkanäle **6** auf.

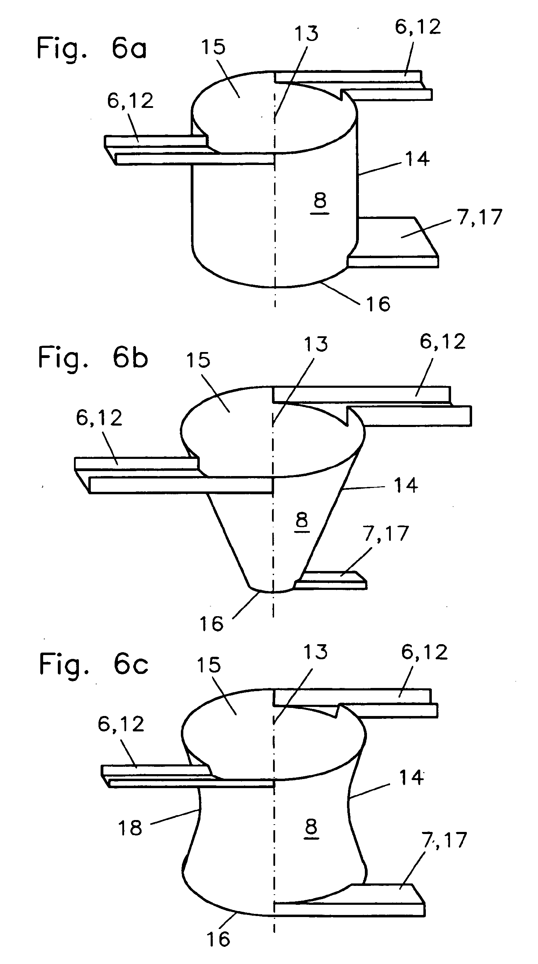

**Fig.6a** **bis c** zeigen Formen um je eine Symmetrieachse **13** rotationssymmetrischer Teilvolumina **8,** die nicht Teil der Erfindung sind, umfassend jeweils eine Mantelfläche **14** und zwei Stirnflächen **15, 16.** An der Mantelfläche im Bereich der oberen Stirnfläche **15** münden tangential Einmündungen **12** in das Teilvolumen ein, während die Ausmündungen **17** in **Fig.6a** **und b** nicht tangential zu der Mantelfläche angeordnet sind. **Fig.6c** gibt dagegen eine tangentiale Ausmündung wieder. **Fig.6a** gibt eine zylindrische Grundform wieder, während **Fig.6b** eine konische, in Richtung der Ausmündungen **17** hin verjüngende Gestaltung sowie **Fig.6c** eine Mantelfläche mit zentraler Verjüngung **18** mit anschließender erneuter Erweiterung der Mantelfläche **14,** die eingangs genannte Wirkungen hervorrufen, wiedergeben.

### Bezugszeichenliste:

- 1: Folienverbund
- 2: Mischerfolie
- 3: Blindfolie
- 4: Temperierfolie
- 5: Kanalstruktur
- 6: Fluidkanal
- 7: Verbindungsleitung
- 8: Teilvolumen
- 9: Mischteilvolumen
- 10: Reaktionsteilvolumen
- 11: Durchbruch
- 12: Einmündung
- 13: Symmetrieachse
- 14: Mantelfläche
- 15: obere Stirnfläche
- 16: untere Stirnfläche
- 17: Ausmündung
- 18: Verjüngung

## Patentansprüche

1. Reaktionsmischersystem geeignet für eine Vermischung und chemische Reaktion von mindestens zwei Fluiden **(A und B),** umfassend mindestens einen Reaktionsmischer mit Fluidkanälen **(6)** als Zuleitung für die Fluide **(A und B)** zu einem Reaktionsmischvolumen, das durch mindestens zwei fluidisch hintereinander geschaltete Teilvolumina (**8**) mit Einmündungen (**12**) und jeweils einer Ausmündung **(17)** gebildet wird, wobei die Teilvolumina über jeweils eine Verbindungsleitung **(7)** miteinander verbunden sind und Mischteilvolumina **(9),** Reaktionsteilvolumina **(10)** sowie Reaktionsmischteilvolumina umfassen, wobei die Teilvolumina als Mischteilvolumina und Reaktionsteilvolumina konzipiert und vorgesehen sind, wobei
a) mindestens zwei Teilvolumina **(8)** von einer um je eine Symmetrieachse **(13)** rotationssymmetrischen Gestalt mit je einer Mantelfläche **(14)** und zwei Stirnflächen **(15, 16)** zur Aufnahme einer wendelförmigen Strömung sind, wobei eine Form mit einer zentralen Verjüngung des Mantelfläche und anschließender Erweiterung des Mantelfläche ausgenommen ist,
b) Einmündungen **(12)** für die Fluide eine Stirnfläche **(15)** und/oder die Mantelfläche **(14)** an dieser Stirnfläche sowie eine Ausmündung die jeweils andere Stirnfläche **(16)** oder die Mantelfläche **(14)** an der anderen Stirnfläche durchdringen und die Verbindungsleitungen **(7)** sich an diese Ausmündungen **(17)** anschließen,
c) jeder Reaktionsmischer im Anschluss an die fluidisch hintereinander geschalteten Teilvolumina **(8)** einen Fluidaustritt aufweist, **dadurch gekennzeichnet, daß** d) die Einmündungen und Ausmündungen tangential zu den als Wandung dienenden Mantelflächen der Teilvolumina angeordnet sind und in Richtung der wendelförmigen Strömung weisen

2. Reaktionsmischersystem nach Anspruch 1, wobei die Teilvolumina **(8),** Fluidkanäle **(6)** und die Verbindungsleitungen **(7)** als offene Strukturen in mindestens ein plattenförmiges Bauteil **(2)** eingearbeitet sind und die offenen Strukturen durch ein benachbartes plattenförmiges Bauteil **(3, 4)** oder einer Abdeckplatten überdeckt sind.

3. Reaktionsmischersystem nach Anspruch 2, wobei die die Teilvolumina **(8)** als Durchbrüche sowie die Fluidkanäle **(6)** und Verbindungsleitungen **(7)** als Rillen und Durchbrüche in mindestens ein plattenförmiges Bauteil eingearbeitet sind.

4. Reaktionsmischersystem nach einem der vorgenannten Ansprüche, wobei die Teilvolumina **(8),** Fluidkanäle **(6)** und/oder die Verbindungsleitungen **(7)** eine Temperiervorrichtung **(4,** 5) aufweisen.

5. Reaktionsmischersystem nach Anspruch 2 und 4, wobei die Temperiervorrichtung Temperierfluidleitungen **(5)** umfassen, die als Strukturen in den plattenförmigen Bauteilen **(4)** und/ oder Abdecklatten um die Mischteilvolumina und/oder Verbindungsleitungen angeordnet sind.

6. Reaktionsmischersystem nach Anspruch 5, wobei die Temperierfluidleitungen Kanalstrukturen **(5)** umfassen, die in die Fluidkanäle **(6)** ausmünden.

7. Reaktionsmischersystem nach einem der vorgenannten Ansprüche, wobei rotationssymmetrischer Gestalt zylinderförmig oder zur Ausmündung (17) hin verjüngend ist.

8. Reaktionsmischersystem nach einem der vorgenannten Ansprüche, **dadurch gekennzeichnet, dass** die Ausmündungen **(17)** außerhalb der Symmetrieachse **(13)** angeordnet sind.

9. Reaktionsmischersystem nach einem der vorgenannten Ansprüche, wobei das erste Teilvolumen **(8)** mit Fluidkanälen **(6)** für mindestens zwei zu mischende oder zu dispergierende Fluide **(A, B)** je mindestens eine Einmündung **(12)** in das erste Teilvolumen **(8)** sowie eine Ausmündung **(17)** umfasst, wobei
a) die Einmündungen der Fluide in abwechselnder Reihenfolge in mindestens einer Ebene angeordnet sind sowie
b) die Teilvolumina rotationssymmetrisch mit einer Symmetrieachse **(13)** und zwei Endbereichen gestaltet ist, wobei die Ausmündungen und die Einmündungen in je einem der Endbereiche positioniert sind.

10. Reaktionsmischersystem nach Anspruch 9, wobei die Einmündungen **(12)** in mindestens zwei Ebenen angeordnet sind, wobei die Einmündungen einer Ebene zu denen in der jeweils benachbarte Ebene versetzt angeordnet sind.

11. Reaktionsmischersystem nach einem der vorgenannten Ansprüche, wobei die Einmündungen **(12)** in die Teilvolumina **(8)** eine Strömungsrichtung in den Teilvolumina vorgeben sowie die Ausmündungen **(17)** in ihrer Anordnung in eine Strömungsrichtung ausgerichtet sind.

12. Reaktionsmischersystem nach einem der vorgenannten Ansprüche, wobei die Verbindungsleitungen **(7)** Bündel von parallel verlaufenen Mikrokanälen umfassen.

13. Reaktionsmischersystem nach einem der vorgenannten Ansprüche, umfassend Reaktionsbereiche für chemische Reaktionen zwischen den zu mischenden Fluiden, wobei die Reaktionsbereiche ganz oder teilweise in den Teilvolumina **(8)** angeordnet sind.

14. Reaktionsmischersystem nach einem der vorgenannten Ansprüche, wobei die Teilvolumina **(8)** unterschiedliche Größe und/oder Gestalt aufweisen.

15. Reaktionsmischersystem nach einem der vorgenannten Ansprüche, wobei mindestens ein Teilvolumen **(8),** das dem ersten Teilvolumen **(8)** nachgeschaltet ist, mindestens eine zusätzliche Einmündung **(12)** für ein oder mehrere weitere Fluide aufweist.

16. Reaktionsmischersystem nach einem der vorgenanten Ansprüche, wobei ein oder mehrere Teilvolumina durch jeweils mehrere parallel geschaltete Teilvolumina ersetzbar sind.

## Claims

1. Reaction mixer system, suitable for a mixing and chemical reaction of at least two fluids **(A and B),** comprising at least one reaction mixer with fluid supply channels **(6)** as a feed line for the fluids **(A and B)** to a reaction mixing zone, which is formed by at least two fluidically arranged successive partial zones **(8)** with inlet openings **(12)** and one outlet opening **(17)** each, wherein the partial zones are connected with each other by means of one connecting line **(7)** each and comprise mixing partial zones **(9)**, reaction partial zones **(10)** and reaction mixing partial zones, wherein the partial zones are designed and provided as mixing partial zones and reaction partial zones, wherein
a) at least two partial zones **(8)** are of a shape rotationally symmetrical about one symmetry axis **(13)** with an outer surface **(14)** and two end faces **(15, 16)** each for receiving a helical flow, wherein one is recessed with a central tapering of the outer surface and subsequent expansion of the outer surface,
b) inlet openings **(12)** for which fluids penetrate an end face **(15)** and/or the outer surface **(14)** at this end face and an outlet opening penetrates the respective other end face **(16)** or the outer surface **(14)** penetrates at the other end face and the connecting lines **(7)** follow these outlet openings **(17),**
c) each reaction mixer after the fluidically successively arranged partial zones **(8)** has a fluid exit, **characterised in that**
d) the inlet openings and outlet openings are arranged tangentially to the outer surfaces, serving as a wall, of the partial zones and point in the direction of the helical flow.

2. Reaction mixer system according to claim 1, wherein the partial zones **(8),** fluid supply channels **(6)** and the connecting lines **(7)** are applied as open structures in at least one plate-shaped component **(2)** and the open structures are covered by a neighbouring plate-shaped component **(3, 4)** or a cover panel.

3. Reaction mixer system according to claim 2, wherein the partial zones **(8)** are applied as breakthroughs and the fluid supply channels **(6)** and connecting lines **(7)** are applied as grooves and breakthroughs in at least one plate-shaped component.

4. Reaction mixer system according to any one of the preceding claims, wherein the partial zones **(8),** fluid supply channels **(6)** and/or the connecting lines **(7)** have a temperature control device **(4, 5).**

5. Reaction mixer system according to claim 2 or 4, wherein the temperature control devices comprise temperature control fluid lines **(5),** which are arranged as structures in the plate-shaped components **(4)** and/or cover panels around the mixing partial zones and/or connecting lines.

6. Reaction mixer system according to claim 5, wherein the temperature control fluid lines comprise channel structures **(5)** exiting into the fluid supply channels **(6).**

7. Reaction mixer system according to any one of the preceding claims, wherein the rotationally symmetrical shape is cylindrical or tapering towards the outlet opening **(17).**

8. Reaction mixer system according to any one of the preceding claims, **characterised in that** the outlet openings **(17)** are arranged outside the symmetry axis **(13).**

9. Reaction mixer system according to any one of the preceding claims, wherein the first partial zone **(8)** with fluid supply channels **(6)** for at least two fluids **(A, B)** to be mixed or dispersed comprises always at least one inlet opening **(12)** into the first partial zone **(8)** and an outlet opening **(17),** wherein
a) the inlet openings of the fluids are arranged in an alternating sequence in at least one plane and
b) the partial zones are designed rotationally symmetrically with a symmetry axis **(13)** and two end portions, wherein the outlet openings and the inlet openings are positioned in one of the end portions each.

10. Reaction mixer system according to claim 9, wherein the inlet openings **(12)** are arranged in at least two planes, wherein the inlet openings of one plane are arranged offset to those in the respective neighbouring plane.

11. Reaction mixer system according to any one of the preceding claims, wherein the inlet openings **(12)** into the partial zones **(8)** specify a flow direction in the partial zones and the outlet openings **(17)** in their arrangement are aligned in a flow direction.

12. Reaction mixer system according to any one of the preceding claims, wherein the connecting lines **(7)** comprise bundles of micro channels running in parallel.

13. Reaction mixer system according to any one of the preceding claims, comprising reaction sections for chemical reactions between the fluids to be mixed, wherein the reaction sections are wholly or partially arranged in the partial zones **(8).**

14. Reaction mixer system according to any one of the preceding claims, wherein the partial zones **(8)** are of different size and/or shape.

15. Reaction mixer system according to any one of the preceding claims, wherein at least one partial zone **(8),** which is downstream of the first partial zone **(8),** has at least one additional inlet opening **(12)** for one or several further fluids.

16. Reaction mixer system according to any one of the preceding claims, wherein one or several partial zones can be replaced, in each case, by several partial zones arranged in parallel.

## Revendications

1. Système mélangeur réactionnel adapté aux mélange et à la mise en réaction chimique d'au moins deux fluides (A et B) comprenant au moins un mélangeur réactionnel comportant des canaux de fluide (6) pour l'amenée des fluides (A et B) vers un volume mélangeur réactionnel qui est formé par au moins deux volumes partiels (8) branchés fluidiquement l'un à la suite l'autre, ayant des entrées (12) et une sortie respective (17), les volumes partiels étant respectivement reliés par une conduite de liaison (7) et compostant des volumes partiels de mélange (9), des volumes partiels réactionnels (10) et des volumes partiels de mélange réactionnels, les volumes partiels étant conçus et prévus en tant que volumes partiels de mélange et volumes partiels réactionnels système dans lequel :
a) au moins deux volumes partiels (9) ont une configuration présentant une symétrie de rotation d'autour un axe de symétrie (13) respectif avec chacun une surface enveloppe (14) et deux surfaces frontales (15, 16) pour la réception d'un flux hélicoïdal une surface enveloppe compostant, un rétrécissement central relié à un élargissement de celle-ci étant exclue,
b) des entrées (12) pour les fluides traversent une surface frontale (15) et/ou la surface enveloppe (14) au niveau de cette surface frontale alors qu'une sortie traverse l'autre surface frontale respective (16) ou la surface enveloppe (14) au niveau de cette autre surface frontale et les conduites de liaison (7) se raccordent à ces sorties (17),
c) chaque mélangeur réactionnel comporte une sortie de fluide, reliée au volumes partiels (8) branchés fluidiquement l'un à la suite de l'autre
**caractérisé en ce que**,
d) les entrées et les sorties sont disposées tangentiellement aux surfaces enveloppes des volumes partiels faisant office de parois et s'étendent en direction du flux hélicoïdal.

2. Système mélangeur réactionnel conforme à la revendication 1, dans lequel les volumes partiels (8), les canaux de fluide (6) et les conduites de liaison (7) sont réalisées sous la forme de structures ouvertes dans au moins un élément (2) en forme de plaque, et les structures ouvertes sont recouvertes par un élément en forme de plaque (3, 4) voisin ou par une plaque de recouvrement.

3. Système mélangeur réactionnel conforme à la revendication 2, dans lequel les volumes partiels (8) sont réalisés sous la forme de perçages tandis que les canaux de fluide (6) et les conduites de liaison (7) sont réalisés sous la forme de rainures et de perçages dans au moins un élément en forme de plaque.

4. Système mélangeur réactionnel conforme à l'une des revendications précédentes, dans lequel les volumes partiels (8), les canaux de fluide (6) et/ou les conduites de liaison (7) comportent un dispositif d'équilibrage (4, 5).

5. Système mélangeur réactionnel conforme à la revendication 2 et à la revendication 4, dans lequel le dispositif d'équilibrage comporte des conduites de fluide d'équilibrage (5) qui sont situées entant que structures dans les éléments en forme de plaques (4) et/ou des plaques de recouvrement autour des volumes partiels de mélange et/ou des conduites de liaison.

6. Système mélangeur réactionnel conforme à la revendication 5, dans lequel les conduites de fluide d'équilibrage comportent des structures de canaux (5) qui débouchent dans les canaux de fluide (6).

7. Système mélangeur réactionnel conforme à l'une des revendications précédentes, dans lequel la configuration à symétrie de rotation est en forme de cylindre ou se rétrécit en direction de la sortie (17).

8. Système mélangeur réactionnel conforme à l'une des revendications précédentes,
**caractérisé en ce que**
les sorties (17) sont situées à l'extérieur de l'axe de symétrie (13).

9. Système mélangeur réactionnel conforme à l'une des revendications précédentes, dans lequel le première volume partiel (8) comporte des canaux de fluide (6) pour au moins deux fluides (A et B) devant être mélangés ou dispersés, avec chacun au moins une entrée (12) dans le premier volume partiel (8) et une sortie (17), système dans lequel :
a) les entrées des fluides sont disposées selon des rangées alternées dans au moins un plan et
b) les volumes partiels présentent une symétrie de rotation avec un axe de symétrie (13) et deux zones d'extrémité, les sorties et les entrées étant respectivement positionnées dans l'une des zones d'extrémité.

10. Système mélangeur réactionnel conforme à la revendication 9 dans lequel les entrées (12) sont positionnées dans au moins deux plans, les entrées d'un plan étant décalées par rapport à celles situées dans le plan voisin respectif.

11. Système mélangeur réactionnel conforme à l'une des revendications précédentes, dans lequel les entrées (12) dans les volumes partiels (8) prédéfinissent une direction d'écoulement dans ces volumes, tandis que les sorties (17) sont dirigées selon leur configuration dans une direction d'écoulement.

12. Système mélangeur réactionnel conforme à l'une des revendications précédentes, dans lequel les conduites de liaison (7) comportent des faisceaux de micro-canaux dirigés parallèlement.

13. Système mélangeur réactionnel conforme à l'une des revendications précédentes, comportant des zones réactionnelles pour la mise en oeuvre de réactions chimiques entre les fluides devant être mélangés, ces zones réactionnelles étant situées totalement ou partiellement dans les volumes partiels (8).

14. Système mélangeur réactionnel conforme à l'une des revendications précédentes, dans lequel les volumes partiels (8) présentent des dimensions et/ou des configurations différentes.

15. Système mélangeur réactionnel conforme à l'une des revendications précédentes, dans lequel au moins un volume partiel (8) qui est situé en aval du premier volume partiel (8) comporte au moins une entrée (12) supplémentaire pour un ou plusieurs autres fluides.

16. Système mélangeur réactionnel conforme à l'une des revendications précédentes, dans lequel un ou plusieurs volume(s) partiel(s) peut(vent) respectivement être remplacé(s) par plusieurs volumes partiels branchés en parallèles.
